# EUROPÄISCHE PATENTANMELDUNG

(11) **EP 1 630 393 A1**
(43) Veröffentlichungstag der Anmeldung: **01.03.2006**
(21) Anmeldenummer: 05015928.4
(22) Anmeldetag: 22.07.2005
(51) Int. Cl.: F02D 41/22, G01D 5/244, F01L 1/00

(54) **Verfahren zur Überprüfung der Abweichung einer Winkelstellung einer Nockenwelle einer Brennkraftmaschine**

(30) Priorität: 27.08.2004 DE 102004041526
(71) Anmelder: GM Global Technology Operations, Inc., Detroit, MI 48265-3000 (US); FIAT AUTO S.p.A., 10135 Torino (IT)
(72) Erfinder: Kafarnik, Peter, 65346 Eltville-Erbach (DE)
(74) Vertreter: Strauss, Peter

(57) **Zusammenfassung**

Die Erfindung betrifft ein Verfahren zur Überprüfung der Abweichung einer Winkelstellung eines Istwertes einer insbesondere kontinuierlich verstellbaren Nockenwelle (1,2) zur Kurbelwelle (3) von einem vorgebbaren Sollwert bei jedem Startvorgang eines Kraftfahrzeugmotors, mit Sensoren (4), die die Nockenwellen- und Kurbelwellenposition bestimmen und mit einem Steuergerät (5) in Signalverbindung stehen, das die Abweichung vergleicht, wobei bei einer Überschreitung eines vorgebbaren ersten Schwellenwertes Δ_{Grenz1} der Abweichung des Istwertes vom Sollwert das Steuergerät (5) ein Fehlersignal abgibt, wobei der vorgebbare Sollwert bei der Erstbetriebnahme des Kraftfahrzeugmotors ermittelt und mit einem im Steuergerät (5) gespeicherten theoretischen Sollwert verglichen wird, wobei bei einer unterhalb eines vorgebbaren zweiten Schwellenwertes Δ_{Grenz2} liegenden Abweichung des Sollwertes vom theoretischen Sollwert der Sollwert im Steuergerät (5) gespeichert wird.

## Beschreibung

Die Erfindung betrifft ein Verfahren zur Überprüfung der Abweichung einer Winkelstellung eines Istwertes von einem vorgebbaren Sollwert einer insbesondere kontinuierlich verstellbaren Nockenwelle zur Kurbelwelle bei jedem Startvorgang eines Kraftfahrzeugmotors.

Um den Anforderungen an die Funktionalität moderner Motorsteuerungen gerecht zu werden, müssen Informationen über das aktuelle Arbeitsspiel des Motors gewonnen werden. Hierfür werden die Drehzahl und die Winkelstellung der Kurbelwelle und der Nockenwelle ermittelt. Die Kurbelwellendrehzahl und - stellung werden in der Regel mit Hilfe eines Geberrades ermittelt, das mit der Kurbelwelle verbunden ist. An diesem Geberrad sind in der Regel 60-2 Zähne ausgebildet, die von einem Sensor (Geber) abgetastet werden. Zur Ermittlung der Nockenwellenstellung kann ein Absolutwinkelgeber eingesetzt werden, wie er beispielsweise in der deutschen Offenlegungsschrift DE 197 22 016 beschrieben wird.

Mit Hilfe des Absolutwinkelgebers sollte sich die aktuelle Nockenwellenstellung mit einer Genauigkeit von 1°-2° erfassen lassen, damit die darauf aufbauenden Steuergerätefunktionen zuverlässig ausgeführt werden können. Diese Anforderung ist aber aufgrund einer Reihe von Randbedingungen nur schwer zu erfüllen, wie z. B. mechanische, elektrische Einbautoleranzen insbesondere der Sensorelemente, Exzentrizität der Nockenwellen, etc.

In der deutschen Offenlegungsschrift DE 199 27 191 wird ein Verfahren zur Korrektur des Winkelfehlers eines Absolutwinkelgebers beschrieben, mit dem die Winkelstellung der Nockenwelle einer Brennkraftmaschine erfasst wird. Das bekannte Verfahren basiert darauf, dass die Drehbewegung der Nockenwelle mit der Drehbewegung der Kurbelwelle eindeutig verknüpft ist, so dass sich die Nockenwellenstellung theoretisch auch rein rechnerisch, anhand der erfassten Kurbelwellenstellung ermitteln lässt. Entsprechend den bekannten Verfahren werden zunächst Korrekturwerte bzw. eine Korrekturkennlinie ermittelt, mit deren Hilfe das Ausgangssignal des Absolutwinkelgebers dann korrigiert wird. Zur Ermittlung eines Korrekturwertes wird jeweils ein Messwert des Absolutwinkelgebers über der entsprechenden Kurbelwellenstellung erfasst. Anhand der Kurbelwellenstellung wird die entsprechende Nockenwellenstellung rechnerisch ermittelt und mit dem Messwert des Absolutwinkelgebers verglichen. Die dabei gebildete Differenz wird als Korrekturwert für diesen Messwert des Absolutwinkelgebers abgespeichert. Um den gesamten Winkelbereich abzudecken, werden auf diese Weise eine Reihe von Korrekturwerten während mindestens einer vollständigen Umdrehung der Nockenwelle ermittelt. Einer der Nachteile dieses Verfahrens ist, dass dieses in seiner Ausführung sehr aufwendig ist.

Des Weiteren ist es allgemein bekannt, dass die Abweichung einer Winkelstellung eines Istwertes einer Nockenwelle zur Kurbelwelle von einem vorgebbaren Sollwert zu überprüfen ist, indem der Sollwert einem theoretisch berechneten Wert und der Istwert der aktuell gemessenen Winkelstellung entspricht. Es ist hierbei allgemein bekannt, dass Abweichungen des Istwertes vom theoretisch berechneten Sollwert auftreten, die bis zu ca. 20°-22° in einem tolerierbaren Bereich liegen können. Diese Abweichungen beruhen unter anderem aufgrund der oben genannten elektrischen und mechanischen Randbedingungen bzw. Toleranzen. Besonders nachteilig ist jedoch, falls beispielsweise ein mechanischer Fehler vorliegt, z.B. ein Überspringen des Nockenwellenantriebes aufgrund von Verschleiß. Dieses bedeutet, dass es zu einer Abweichung der Winkelstellung des Istwertes der Nockenwelle zur Kurbelwelle in der Größenordnung von ungefähr 6° kommt. Da Toleranzen bzw. Abweichungen bis ca. 20-22° im Stand der Technik toleriert werden, wird ein derartiger mechanischer Fehler, der im soeben dargestellten Beispiel lediglich eine Abweichung von 6° aufweist, nicht erkannt. Ein Überspringen des Nockenwellenantriebes, kann schlimmstenfalls zu einem Aufsetzen der Ventile auf den Kolben und somit zu Motorschäden führen.

Zum allgemeinen technischen Verständnis wird noch auf die DE 196 50 249 A1 hingewiesen.

Es ist Aufgabe der vorliegenden Erfindung, ein Verfahren zur Überprüfung der Abweichung einer Winkelstellung eines Istwertes von einem vorgebbaren Sollwert einer Nockenwelle zur Kurbelwelle bereitzustellen, mit dem die oben genannten Nachteile vermieden werden. Ferner soll ein einfaches und zuverlässig funktionierendes Verfahren zur Nockenwellenpositionserfassung geschaffen werden, mit dem mechanische Fehler im Nockenwellenantrieb zuverlässig diagnostiziert werden können, wobei gleichzeitig weitestgehend Schäden am Motor vermieden werden können.

Die Aufgabe wird durch ein Verfahren mit den Merkmalen aus Anspruch 1 gelöst. In den abhängigen Ansprüchen sind bevorzugte Weiterbildungen des erfindungsgemäßen Verfahrens angegeben.

Es ist erfindungsgemäß ein Verfahren vorgesehen, das bei jedem Startvorgang eines Kraftfahrzeugmotors die Abweichung einer Winkelstellung eines Istwertes von einem vorgebbaren Sollwert einer insbesondere kontinuierlich verstellbaren Nockenwelle zur Kurbelwelle überprüft. Hierbei bestimmen Sensoren die Nockenwellen- und Kurbelwellenposition, wobei die Sensoren mit einem Steuergerät in Signalverbindung stehen. Das Steuergerät vergleicht hierbei den ermittelten Istwert mit dem vorgegebenen Sollwert. Bei einer Überschreitung eines vorgebbaren ersten Schwellenwertes der Abweichung des Istwertes vom Sollwert gibt das Steuergerät ein Fehlersignal ab. Besonders wesentlich ist, dass der vorgebbare Sollwert bei der Erstbetriebnahme des Kraftfahrzeugmotors ermittelt wird. Während der Erstbetriebnahme wird erfindungsgemäß der ermittelte Sollwert mit einem im Steuergerät gespeicherten theoretischen Sollwert verglichen. Liegt die Abweichung des Sollwertes vom theoretischen Sollwert unterhalb eines vorgebbaren zweiten Schwellenwertes, wird der Sollwert im Steuergerät gespeichert. Ansonsten gibt das Steuergeräte ein Fehlerbereich ab. Dieser Sollwert stellt für alle weiteren Überprüfungen der Abweichung der Winkelstellung des Istwertes vom Sollwert eine Art Referenzwert dar. Bei Erstbetriebnahme jedes Kraftfahrzeugmotors wird erfindungsgemäß der Sollwert bestimmt, der aufgrund von mechanischen und elektrischen Toleranzen in der Regel vom gespeicherten theoretischen Sollwert abweicht. Unter der Prämisse, dass der Kraftfahrzeugmotor sowie der Nockenwellenantrieb keine mechanischen Fehler aufweisen, kann unterstellt werden, dass sich die Abweichung des gemessenen Sollwertes vom theoretischen Sollwert aus den oben genannten mechanischen und elektrischen Toleranzen zusammensetzt. Hierbei kann der zweite Schwellenwert Werte zwischen 1°-20° aufweisen, die hinsichtlich des erfindungsgemäßen Verfahren tolerierbar sind. Weist jedoch der gemessene Sollwert eine Abweichung vom theoretischen Sollwert auf, die über dem zweiten Schwellenwert liegt, muss davon ausgegangen werden, dass es sich hierbei nicht nur um mechanische und/oder elektrische Toleranzen der Positionserfassungsgeräte handelt, sondern tatsächlich ein mechanischer Fehler beispielsweise im Nockenwellenantrieb vorliegt. In diesem Fall sollte der Kraftfahrzeugmotor zur genaueren Analyse aus der Produktion entnommen werden.

Ist der Sollwert bei der Erstbetriebnahme des Kraftfahrzeugmotors ermittelt worden, überprüft das Verfahren bei jedem Startvorgang des Kraftfahrzeugmotors, ob eine Überschreitung eines vorgebbaren ersten Schwellenwertes der Abweichung des Istwertes vom Sollwert vorliegt. Im Falle einer Überschreitung gibt das Steuergerät ein Fehlersignal ab. Der wesentliche Vorteil dieses Verfahrens ist, dass der Diagnosebereich zur Überprüfung der Abweichung der Winkelstellung des Istwertes vom Sollwert verringert werden kann. Bei dem in der Erstbetriebnahme des Kraftfahrzeugmotors ermittelten Sollwert sind bereits die mechanischen und elektrischen Toleranzen im Wesentlichen aufgenommen, so dass bei jedem Startvorgang des Kraftfahrzeugmotors diese genannten Toleranzen nicht jedes Mal mit berücksichtigt werden müssen, wodurch sich ein nachteiligerweise großer Diagnosebereich ergeben würde. Durch den einmalig ermittelten Sollwert bei der Erstbetriebnahme des Kraftfahrzeugmotors können die in jedem Kurbelwellenantrieb vorhandenen Toleranzen herausgefiltert werden, so dass bei der Überprüfung der Abweichung der Winkelstellung des Istwertes vom Sollwert weitestgehend mechanische Fehler, die eventuell zu Motorschäden führen können, sichtbar gemacht werden können. Vorzugsweise weist der erste Schwellenwert, der prinzipiell den Diagnosebereich bestimmt, einen Wert zwischen 1° und 5° auf. Der Schwellenwert kann jedoch selbstverständlich auch größere Werte einnehmen, was u.a. vom Nockenwellenantrieb abhängt. Verglichen zu den im Stand der Technik zu tolerierenden Abweichungen von 20°-22° stellt dieser erste Schwellenwert eine wesentliche Verkleinerung der zu tolerierenden Winkelabweichung dar, wobei gleichzeitig Fehler im Nockenwellenantrieb wirksam erkannt werden können.

Erfindungsgemäß weist das Steuergerät eine mit einem Speicher verbundene Prozesseinheit auf. Zweckmäßigerweise steht das Steuergerät drahtlos mit den Sensoren in Verbindung. Hierbei kann die drahtlose Verbindung eine Funkverbindung sein. Die Funkverbindung liegt bevorzugt im GHz-Bereich gemäß dem Blue-Tooth-Standard, der durch die Blue-Tooth-Special-Interest-Group spezifiziert ist.

Bei einer Ausführungsform der Erfindung ist der Sensor ein Induktionssensor und/oder ein Hall-Sensor und/oder ein Magnetoresitiver-Sensor.

Überschreitet die Abweichung des Istwertes vom Sollwert den ersten Schwellenwert, gibt das Steuergerät ein Fehlersignal ab, wobei erfindungsgemäß das Fehlersignal über eine Kontrollleuchte innerhalb des Kraftfahrzeuges sichtbar gemacht wird. Somit erhält der Benutzer des Kraftfahrzeuges die notwendige Information, dass sich die Nockenwelle zur Kurbelwelle in einer Winkelstellung befindet, die außerhalb eines tolerierbaren Bereiches liegt.

Die Überprüfung der Abweichung der Winkelstellung des Istwertes von dem Sollwert findet lediglich nur einmal beim Startvorgang des Kraftfahrzeugmotors statt. Hierbei befindet sich die Nockenwelle vorzugsweise in Anschlagposition (Limp-Home-Position), das bedeutet, dass die Überprüfung der Winkelstellung lediglich bei nicht verstellter Nockenwelle durchgeführt wird. Hierbei ist anzumerken, dass das erfindungsgemäße Verfahren auf Systeme mit und ohne Nockenwellenverstellung beziehbar ist.

Bei einer Alternative der Erfindung senden die an der Kurbelwelle und an der Nockenwelle angeordneten Sensoren Rechtecksignale an das Steuergerät. Der im Steuergerät angeordnete Speicher, der als Festwertspeicher ausgebildet sein kann, umfasst ein Programm, das aus den Rechtecksignalen einen Istwert und/oder einen Sollwert berechnet. Bei dem Festwertspeicher kann es sich beispielsweise um ein ROM, EPROM oder Flash-EPROM handeln. Es sind selbstverständlich auch alternative Speicher wie beispielsweise ein RAM-Speicher oder ein EEPROM möglich. Bei der Prozessoreinheit kann es sich beispielsweise um einen Mikrocontroller handeln. Der Speicher ist vorzugsweise ein Siliziumchip, der ein sehr geringes Gewicht und ein sehr kleines Bauvolumen aufweist sowie nur sehr geringe Mengen an Strom benötigt. Nachdem das Programm den Istwert und den Sollwert ermittelt hat, kann die etwaige Abweichung beider Werte bestimmt werden.

Zweckmäßigerweise wird der vorgebbare Sollwert/Istwert derart ermittelt, dass eine Vielzahl von Einzelsollwerten/Einzelistwerten ermittelt werden und anschließend der Durchschnittswert aller Einzelsollwerte/Einzelistwerte den Sollwert/Istwert ergibt. Vorzugsweise werden ca. 10-20 Einzelsollwerte/Einzelistwerte bestimmt.

Die Aufgabe wird ebenfalls durch ein Computerprogramm-Produkt zur Ausführung des erfindungsgemäßen Verfahrens gelöst, wobei die Verfahrensschritte in einem in dem Computer-Produkt gespeicherten Programm integriert sind. Des Weiteren wird die Aufgabe durch ein Steuergerät gelöst, das derart ausgebildet ist, dass das Verfahren in dem Steuergerät ausführbar ist.

Weitere Vorteile, Merkmale und Einzelheiten der Erfindung ergeben sich aus der nachfolgenden Beschreibung eines bevorzugten Ausführungsbeispiels sowie anhand der dargestellten Zeichnungen. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Nockenwellenantriebes mit einer Kurbelwelle und einer Einlassnockenwelle und einer Auslassnockenwelle und
- Fig. 2: vier Signalverläufe bezüglich der Winkelstellung der Kurbelwelle und der Nockenwelle.

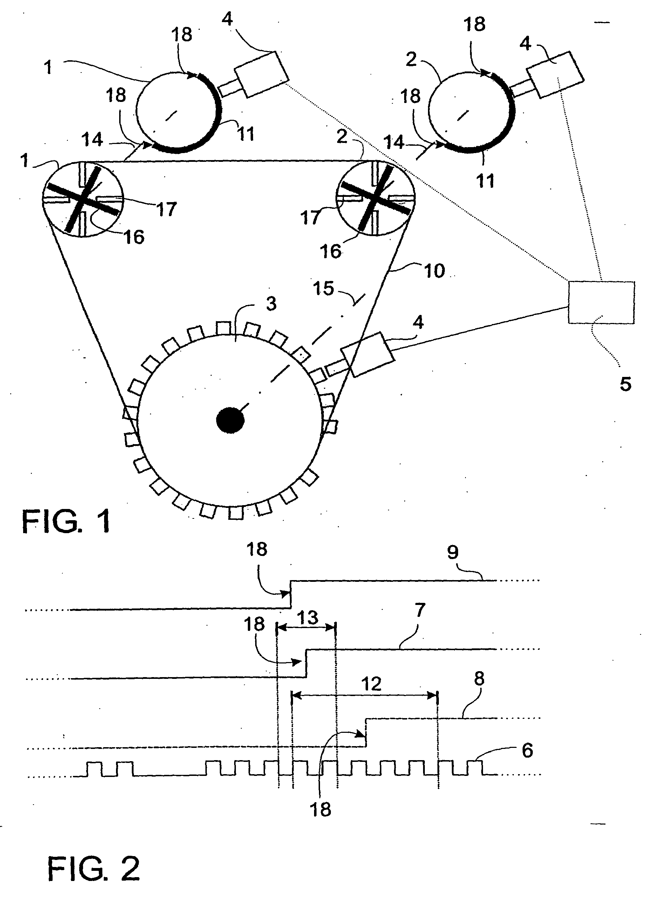

Figur 1 zeigt einen Nockenwellenantrieb. Hierbei weist der Nockenwellenantrieb zwei Nockenwellen 1, 2 auf, der eine Einlassnockenwelle 1 und eine Auslassnockenwelle 2 umfasst. Ferner ist eine Kurbelwelle 3 mit einem Geberrad 11 angeordnet, die mit einem Zahnriemen 10 in Wirkverbindung zu den Nockenwellen 1, 2 steht. Die Kurbelwelle 3 umfasst eine Vielzahl von Zähnen, in denen der Zahnriemen 10 eingreift. Vorzugsweise handelt es sich hierbei um einen Kunststoffriemen. Der Zugstrang des Kunststoffriemenrückens kann aus einer Glascordeinlage bestehen, die zuverlässig die auftretenden Zugkräfte sowie die entstehenden Dehnungen überträgt. Neben den geringen Abmaßen zeichnet sich der verwendete Kunststoffriemen durch geringe Herstellungskosten sowie durch einen geräuscharmen Lauf auf. In einer weiteren Alternative der Erfindung, ist ein Kettenantrieb ebenfalls denkbar. Wenn größere Kräfte zu übertragen sind und wenn die Steuerzeiten exakt einzuhalten sind, ist ein Kettenantrieb vorteilhaft. Zur Dämpfung von Kettengeräuschen kann vorzugsweise die Kette in Gleitschienen aus Kunststoff geführt sein, die Kurbelwelle kann ebenfalls zusätzlich gummiert sein.

Wie in Figur 1 schematisch dargestellt, sind die Nockenwellen 1, 2 kontinuierlich verstellbar. Hierbei ist ein Anschlag 17 und ein Flügelrad 16 in beiden Nockenwellen 1, 2 vorgesehen, das mit der Nockenwelle 1, 2 verbunden ist. Die Verstellung der Nockenwelle 1, 2 erfolgt durch eine Drehung des Flügelrades 16, ausgehend vom Anschlag 17 um einen bestimmten Winkelbereich. Die Nockenwellenverstellung ist bereits durch unterschiedliche Vorrichtungen bekannt, die beispielsweise in der DE 102 18 201 C1, der DE 199 58 629 A1 und in der DE 101 61 701 A1 beschrieben sind, worauf auf die Funktionsweise im Folgenden nicht mehr eingegangen wird.

An der Kurbelwelle 3, die während des Betriebes um eine Achse 15 rotiert, ist eine Sensoreinheit 4 in einem bestimmten Abstand zu den Kurbelwellenzähnen angeordnet. An der Einlassnockenwelle 1 sowie an der Auslassnockenwelle 2 ist ebenfalls eine Sensoreinheit 4 positioniert. Die Nockenwellen 1, 2 weisen des Weiteren im Bereich der Sensoreinheit 4 jeweils eine Geberscheibe 11 auf, die umfangsseitig auf der Nockenwelle 1, 2 angeordnet ist. Die Geberscheibe 11, die vorzugsweise aus Metall besteht, kann beispielsweise formschlüssig und/oder stoffschlüssig und/oder kraftschlüssig mit der Nockenwelle 1, 2 verbunden sein. Wie Figur 1 besonders verdeutlicht, ist die Geberscheibe 11 zu einer Seite C-förmig ausgebildet. Die Geberscheibe 11 umschließt hierbei vollständig den Umfang der Nockenwelle 1, 2. Zu einer Seite (von 0°-180°) weist die Geberscheibe 11 eine größere Wandstärke auf, das bedeutet, dass eine Hälfte der Geberscheibe 11 einen geringen Durchmesser als die gegenüberliegende andere Hälfte der Geberscheibe 11 aufweist.

Während des Betriebes des Kraftfahrzeugmotors ermitteln die Sensoren 4 die Winkelstellung der Nockenwelle 1, 2, wobei kontinuierlich ein Signal von den Sensoren 4 zu einem Steuergerät 5 gesendet wird. Die ermittelten Winkelstellungssignale an der Nockenwelle 1, 2 lassen sich durch ein langgezogenes Rechtecksignal visualisieren, welches einen Verlauf aufweist, der beispielsweise in Figur 2 mit dem Bezugszeichen 7 oder 9 gekennzeichnet ist. Die Sensoreinheit 4 an der Kurbelwelle 3 ist ebenfalls in Signalverbindung mit dem Steuergerät 5. Das von der Sensoreinheit 4 ermittelte Signal an der Kurbelwelle 3 weist hierbei einen Verlauf auf, der in Figur 2 das Bezugszeichen 6 aufweist.

Das erfindungsgemäße Verfahren überprüft die Abweichung einer Winkelstellung eines Istwertes von einem vorgebbaren Sollwert der verstellbaren Nockenwelle 1, 2 zur Kurbelwelle 3. Das Rechtecksignal 6 stellt hierbei die Winkelstellung der Kurbelwelle 3 bezogen auf eine theoretisch berechnete Winkelstellung der Nockenwelle 1, 2 dar, die mit dem Bezugszeichen 8 in Figur 2 dargestellt ist. Der Flankenwechsel 18 ergibt sich durch die Stufe 18 in Figur 2. Der mit dem Bezugszeichen 12 dargestellte Diagnosebereich in Figur 2 umfasst - ausgehend vom theoretischen Flankenwechsel 18 des theoretischen Signalverlaufs 8 - zu jeder Seite 2½ Zähne. Ausgehend von einer Kurbelwelle mit 60-2 Zähnen entspricht dieses einem Diagnosebereich von 15°.

Erfindungsgemäß wird bei der Erstbetriebnahme des Kraftfahrzeugmotors ein Sollwert bezüglich der Winkelstellung der Nockenwelle 1, 2 zur Kurbelwelle 3 ermittelt, der als Referenzwert für alle weiteren Überprüfungen der Abweichung der Winkelstellung des Istwertes von dem Sollwert verwendet wird. Der Signalverlauf 7 stellt hierbei den bei der Erstbetriebnahme des Kraftfahrzeugmotors ermittelten Sollwert dar. Wie besonders deutlich zu erkennen ist, weicht der Flankenwechsel 18 des Signalverlaufes 7, der als Sollwert dient, vom Flankenwechsel 18 des theoretisch berechneten Signalverlaufes 8 ab. Erfindungsgemäß reicht es aus, dass ein kleinerer Diagnosebereich 13 für die Überprüfung der Abweichung der Winkelstellung des Istwertes vom Sollwert verwendet wird, wobei gleichzeitig entstehende mechanische Fehler an dem Nockenwellenantrieb wirksam diagnostiziert werden können, die im größeren Diagnosebereich 12 nicht aufgefallen wären. Der Signalverlauf 9 entspricht dem gemessenen Istwert der Winkelstellung der Nockenwelle 1, 2 zur Kurbelwelle 3. In diesem Fall befindet sich der Istwert des Flankenwechsel 18 des Signalverlaufes 9 innerhalb des Diagnosebereichs 13 des während der Erstbetriebnahme des Kraftfahrzeugmotors ermittelten Sollwerts. Der Diagnosebereich 13 umfasst ausgehend von der Flanke 18 einen Zahn, welches eine Abweichung von 6° entspricht.

Der Diagnosebereich 13 wird durch einen ersten Schwellenwert bestimmt. Das bedeutet, dass der erste Schwellenwert den unteren und den oberen Diagnosebereich bestimmt. Bei einer Überschreitung des ersten Schwellenwertes der Abweichung des Istwertes vom Sollwert gibt das Steuergerät 5 ein Fehlersignal aus. Das Fehlersignal kann hierbei über eine Kontrollleuchte, die nicht dargestellt ist, innerhalb des Kraftfahrzeuges sichtbar gemacht werden.

Die Sensoren 4 können mit dem Steuergerät 5 drahtlos in Verbindung stehen. Bei den Sensoren 4 handelt es sich im dargestellten Ausführungsbeispiel um Hall-Sensoren. Das erfindungsgemäße Verfahren wird hierbei derart durchgeführt, dass sich beim Startvorgang die Nockenwelle 1, 2 in Anschlagposition befindet. Das bedeutet, dass das Flügelrad 16 am Anschlag 17 anliegt.

## Patentansprüche

1. Verfahren zur Überprüfung der Abweichung einer Winkelstellung eines Istwertes ϕᵢₛₜ von einem vorgebbaren Sollwert ϕₛₒₗₗ einer insbesondere kontinuierlich verstellbaren Nockenwelle (1,2) zur Kurbelwelle (3) bei jedem Startvorgang eines Kraftfahrzeugmotors, mit Sensoren (4), die die Nockenwellen- und Kurbelwellenposition bestimmen und mit einem Steuergerät (5) in Signalverbindung stehen, das die Abweichung vergleicht, wobei bei einer Überschreitung eines vorgebbaren ersten Schwellenwertes Δ_{Grenz1} der Abweichung des Istwertes ϕᵢₛₜ vom Sollwert ϕₛₒₗₗ das Steuergerät (5) ein Fehlersignal abgibt, wobei der vorgebbare Sollwert ϕₛₒₗₗ bei der Erstbetriebnahme des Kraftfahrzeugmotors ermittelt und mit einem im Steuergerät (5) gespeicherten theoretischen Sollwert ϕₛₒₗₗ₋ₜₕ verglichen wird, wobei bei einer unterhalb eines vorgebbaren zweiten Schwellenwertes Δ_{Grenz2} liegenden Abweichung des Sollwertes ϕₛₒₗₗ vom theoretischen Sollwert ϕₛₒₗₗ₋ₜₕ der Sollwert ϕₛₒₗₗ im Steuergerät (5) gespeichert wird, andernfalls wird vom Steuergerät (5) ein Fehlersignal abgegeben.

2. Verfahren nach Anspruch 1, **dadurch gekennzeichnet, dass** der erste Schwellenwert Δ_{Grenz1} einen Wert zwischen 1° und 5° aufweist.

3. Verfahren nach Anspruch 1 oder 2, **dadurch gekennzeichnet, dass** der zweite Schwellenwert Δ_{Grenz2} einen Wert zwischen 1° und 20° aufweist.

4. Verfahren nach einem der genannten Ansprüche, **dadurch gekennzeichnet, dass** das Steuergerät (5) eine mit einem Speicher verbundene Prozessoreinheit aufweist.

5. Verfahren nach einem der genannten Ansprüche, **dadurch gekennzeichnet, dass** die Sensoren (4) mit dem Steuergerät (5) drahtlos in Verbindung stehen.

6. Verfahren nach einem der genannten Ansprüche, **dadurch gekennzeichnet, dass** die drahtlose Verbindung eine Funkverbindung ist.

7. Verfahren nach einem der genannten Ansprüche, **dadurch gekennzeichnet, dass** der Sensor (4) ein Induktionssensor und/oder ein Hallsensor und/oder ein magnetoresistiver Sensor ist.

8. Verfahren nach einem der genannten Ansprüche, **dadurch gekennzeichnet, dass** das Fehlersignal über eine Kontrollleuchte innerhalb des Kraftfahrzeuges sichtbar gemacht wird.

9. Verfahren nach einem der genannten Ansprüche, **dadurch gekennzeichnet, dass** sich beim Startvorgang die Nockenwelle (1,2) in Anschlagposition (Limp Home Position) befindet.

10. Verfahren nach einem der genannten Ansprüche, **dadurch gekennzeichnet, dass** die an der Kurbelwelle (3) und an der Nockenwelle (1,2) angeordneten Sensoren (4) Rechtecksignale (6,7) an das Steuergerät (5) senden.

11. Verfahren nach Anspruch 10, **dadurch gekennzeichnet, dass** der Speicher ein Programm umfasst, das aus den Rechtecksignalen (6,7) einen Istwert ϕᵢₛₜ und/oder einen Sollwert ϕₛₒₗₗ berechnet

12. Verfahren nach einem der genannten Ansprüche, **dadurch gekennzeichnet, dass** der vorgebbare Sollwert ϕₛₒₗₗ bei der Erstbetriebnahme des Kraftfahrzeugmotors derart ermittelt wird, dass eine Vielzahl von Einzelsollwerten ϕ_{soll-einzel} ermittelt werden und anschließend der Durchschnittswert aller Einzelsollwerte ϕ_{soll-einzel} den Sollwert ϕₛₒₗₗ ergibt.

13. Verfahren nach einem der genannten Ansprüche, **dadurch gekennzeichnet, dass** der Istwert ϕᵢₛₜ derart ermittelt wird, dass eine Vielzahl von Einzelistwerten ϕ_{ist-einzel} ermittelt werden und anschließend der Durchschnittswert aller Einzelistwerte ϕ_{ist-einzel} den Istwert ϕᵢₛₜ ergibt.

14. Computerprogramm-Produkt zur Ausführung des Verfahrens nach einem oder mehreren der vorhergehenden Ansprüche, **dadurch gekennzeichnet, dass** die Verfahrensschritte in einem in dem Computerprogramm-Produkt gespeicherten Programm integriert sind.

15. Steuergerät (5) derart ausgebildet, dass das Verfahren nach einem oder mehreren der vorhergehenden Ansprüche in dem Steuergerät (5) ausführbar ist.

16. Kraftfahrzeug umfassend ein Steuergerät (5) und/oder ein Verfahren nach einem der vorhergehenden Ansprüche.
